Europäisches Patentamt

European Patent Office

Office européen des brevets

(11) Publication number: **0 082 516**
**B1**

# EUROPEAN PATENT SPECIFICATION

(45) Date of publication of patent specification: **25.03.87**

(51) Int. Cl.⁴: **H 01 M 8/24**

(21) Application number: **82111814.8**

(22) Date of filing: **20.12.82**

(54) Apparatus and method for compressing a fuel cell stack.

(30) Priority: **21.12.81 US 333168**

(43) Date of publication of application:
**29.06.83 Bulletin 83/26**

(45) Publication of the grant of the patent:
**25.03.87 Bulletin 87/13**

(84) Designated Contracting States:
**DE FR GB IT**

(56) References cited:
**EP-A-0 015 189**
**EP-A-0 072 468**
**FR-A-1 303 704**
**GB-A- 964 467**
**US-A-3 607 425**

(73) Proprietor: **Energy Research Corporation
3 Great Pasture Road
Danbury Connecticut 06810 (US)**

(72) Inventor: **Chi, Chang Vum
118 Pocono Road
Brookfield Connecticut 06804 (US)**

(74) Representative: **Abitz, Walter, Dr.-Ing. et al
Abitz, Morf, Gritschneder P.O. Box 86 01 09
D-8000 München 86 (DE)**

Courier Press, Leamington Spa, England.

## Description

### Background of the Invention

This invention pertains to an apparatus and to a method for compressing a fuel cell stack.

In the formation of fuel cell stacks comprised of one or more fuel cells, it is extremely important that the stack be placed and held under a preselected or predetermined compression in order for proper stack operation. Thus, if insufficient pressure is applied, performance may deteriorate and, in fact, the individual cells of the stack might be severely damaged if the pressure is reduced to the point where significant leakage of the reactant gases might develop. On the other hand, excessive pressures can result in the entry of deformable cell members and electrolyte into the reactant gas channels, thereby blocking same and hindering stack performance. In addition, cell components might be cracked by excessive pressures. Thus, too great a pressure also will result in decreased performance and in extreme cases severe damage to the stack.

To date a number of procedures have been proposed to realize a desired stack compression. In some techniques, the stack is situated in an assembly comprised of at least one pair of compression bars. Each pair of bars is connected by two threaded compression rods each having compression nuts on its ends for situating the respective compression bars (GB—A—964 467, FR—A—1 303 704, US—A—3 607 425). In one practice using this type of assembly, a torque wrench is used to provide a torque to the compression nuts, this torque having been calculated to provide a desired stack compression. This practice, however, often provides inaccurate results due to the inherent and wear-induced imperfections in the rod threads.

Another technique which has been used is to determine the degree of deflection required in the compression bars in order to bring about a desired compression in the stack and to compress the stack until the calculated deflection is achieved. While this technique has been found to provide suitable results, the procedure of measuring the deflection of the rods is cumbersome and time consuming, thus making the overall technique unattractive from a production standpoint.

A further practice which has been proposed for fuel stack compression is to place the entire stack within a pneumatic or hydraulic press. While this practice enables the desired compression to be realized, it also has a number of drawbacks. If the stack is first assembled and then placed in the press, difficulties arise in moving the stack, which could be upwards of 10 feet in height, in terms of the equipment required and of the need to move the stack with as little shifting of the cells as possible so as to prevent tearing and other injury to the delicate cell components. On the other hand, if the cells are stacked on the press itself, an oversized and much higher press would be needed in order to provide sufficient room to accommodate the personnel and equipment required for assembly. Another disadvantage is that in tall stacks, due to the tolerances in the individual cell components, there might be sections of the stack that are higher than others. Since the press plates are flat on top and bottom, when the stack is compressed only these high spots will receive the desired compression. The remaining sections will, therefore, be undercompressed rendering the stack amenable to the same problems discussed hereinabove for undercompression.

A method for assembling a filter press type of electrolytic cell is known wherein compression means are employed at multiple points about the periphery of the stacked electrodes to substantially simultaneously apply a uniform pressure to compress the cell, the compressed stack is secured in its compressed state so that the stack is retained in its compressed state when the compression on the compression means is releaved (EP—A—15 189 and 72 468).

The invention as claimed in claims 1 and 14 solves the problem of how to avoid too great or too low a pressure in a relatively simple and easily managable manner when compressing a fuel cell stack.

### Summary of the Invention

In accordance with the principle of the present invention, the above and other objectives are realized in an assembly comprising first and second spaced compression members defining a region therebetween for receiving a fuel cell stack, first and second adjustable connecting members connecting first opposing sides and second opposing sides, respectively, of the compression members and first and second means acting on the first and second connecting members, respectively, for exerting a compression force between the first and second compression members.

In the embodiment of the invention to be disclosed hereinafter, each compression means is detachably connected to the connecting member upon which it acts. More particularly, each compression means comprises a ram assembly having an axially movable actuating rod whose one end is connected to the assembly ram for movement therewith and whose other end is connected by a detachable coupling to the corresponding connecting member. Spacer means between each ram assembly housing and the first plate provides a counterforce to the force resulting from the ram on the corresponding connecting member, whereby compression of the compression members and, therefore, the stack therebetween is realized.

In this embodiment a common pressure source and a distribution means for providing equal pressures to the compression means are also provided.

### Detailed Description of the Drawings

The above and other features and aspects of the present invention will become more apparent upon reading the following detailed description in conjunction with the accompanying drawings, in which:

FIG. 1 illustrates an assembly for compressing a fuel cell stack in accordance with the principles of the present invention; and

FIG. 2 shows an enlarged view of one ram assembly of the compression assembly of FIG. 1.

## Detailed Description

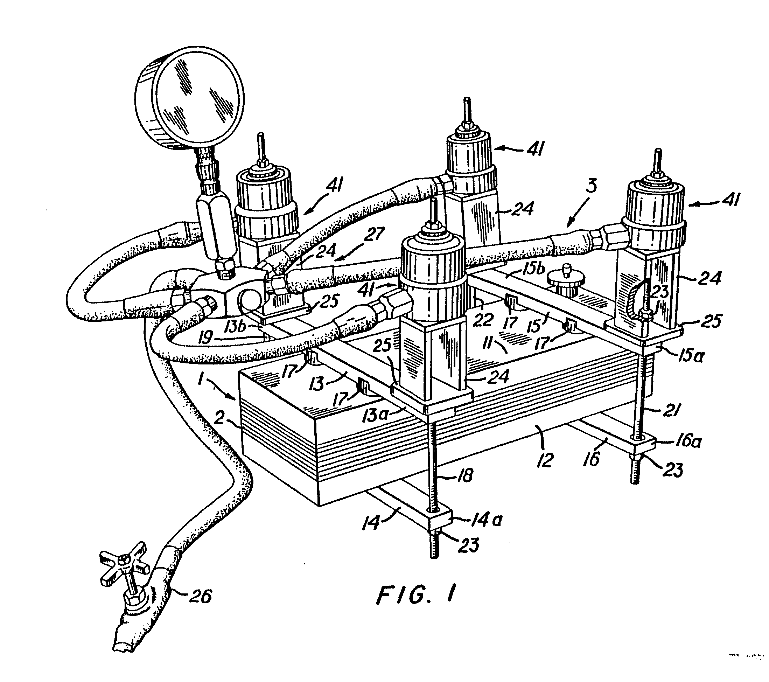

In FIG. 1, a fuel cell stack 1 comprised of a number of fuel cell assemblies 2 is to be placed and held under a predetermined compression desired for the stack. This is realized via a compression assembly 3 in accordance with the principles of the present invention.

Upper and lower end plates 11 and 12 sandwich the stack 1 and are held between a first pair of opposing compression members or bars 13 and 14 disposed at one location along the plates and a second pair of opposing compression members or bars 15 and 16 disposed at a second location along the plates. The upper compression members 13 and 15, and the lower compression numbers 14 and 16 are seated on the upper and lower plates 11 and 12 via foot pads 17 which are distributed so as to distribute the compression force evenly over the plates.

Each pair of the compression bars is held together by adjustable connecting assemblies formed by threaded compression rods and compression nuts disposed at opposing ends of the bars. Thus, compression rods 18 and 19 extend through apertures in opposing ends 13a and 14a and 13b and 14b (not visible) of bars 13 and 14, and compression rods 21 and 22 extend through apertures in opposing ends 15a and 16a and 15b and 16b (not visible) of bars 15 and 16. Compression nuts 23 are situated at the threaded ends of the rods 18, 19, 21 and 22 so as to hold the rods and bars together and to aid in realizing and maintaining the desired compression, as will be discussed below.

A ram assembly 41 and associated support assembly 24 and spacer 25 are situated at each end of the upper compression bars 13 and 15 and together provide the forces on the respective pairs of compression bars necessary to compress the stack 1. The ram assemblies may be either pneumatic or hydraulic and are activated by a common pressure source 26 and a valve distribution system 27 which ensures equal pressure are applied to each assembly.

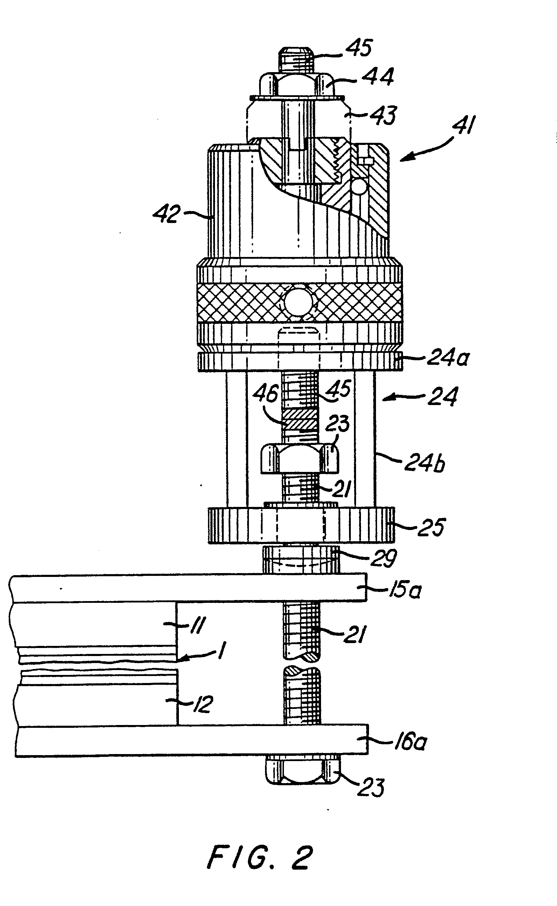

FIG. 2 shows an enlarged view of a ram assembly 41 and related equipment at one end of the compression bars 15 and 16. The ram assembly housing 42 is supported on an adapter plate 24a of support assembly 24 and houses a ram 43 whose upper end abuts a retainer nut 44. The retainer nut 44 is threaded onto a translatable central rod or shaft 45 which extends downwardly through the ram housing 42 and through the adapter plate 24a into the interior of U-shaped housing 24b of assembly 24.

The upper end of compression rod 21 also enters the interior of housing 24b, the rod 21 having passed through spacer 25 and spherical and load washers 29 situated between the spacer and the compression bar 15. A disconnectable coupling 46 connects the upper end of the rod above the nut 23 to the lower end of the shaft 45.

In operation, compression nuts 23 are first hand tightened to fix the compression bars and compression rods in place. The pressure source 26 is then activated and it delivers pressure to the distributor valve 27. The valve 27 in turn, couples equal amounts of pressure to the ram assemblies 41. This pressure causes the respective rams of each assembly and the respective shafts 45 connected thereto to be raised to the position shown in FIG. 2. The shafts 45 thereupon, via couplings 46, similarly raise the compression rods 18, 19, 21 and 22 causing an upward force on the lower compression bars 14 and 16. At the same time a downward counterforce is exerted by the housings 42, support assemblies 24, spacers 25 and washers 29 on the upper compression bars 13 and 15. The respective upward and downward forces on the lower and upper compression bars cause, via foot pads 17, a uniform compression force to be exerted between the plates 11 and 12 and, thereby, the stack 1 is uniformly compressed to the desired compression.

After the stack 1 has been compressed, the compression nuts 23 at the upper ends of the compression rods 18, 19, 21 and 22 are tightened against the respective spacers and washers to maintain the compression bars and, thus, the stack under compression. The shafts 45 of the ram assemblies 41 are then disconnected from the compression rods via release of the couplings 46 and the ram assemblies, support assemblies and couplings, along with the distributor valve 27 are removed for use on another stack.

With the compression assembly of the present invention, as above-mentioned, equal compression forces are exerted on the compression bars and, therefore, equal forces are uniformly distributed by the foot pads to the compression plates. As a result, uniform compression of the stack is realized with a compression assembly which is of relatively simple construction and which is easily disassembled and assembled for further use.

In all cases, it is understood that the above-described arrangements are merely illustrative of the many possible specific embodiments which represent applications of the present invention. Numerous and varied other arrangements can readily be devised in accordance with the principles of the present invention without departing from the scope of the invention.

## Claims

1. Apparatus for compressing a fuel cell stack comprising:

first and second compression members (13, 14; 15, 16) arranged in opposing spaced relationship;

first and second adjustable connecting members (18, 19, 21, 22; 23) connecting opposing first ends and opposing second ends (13a, 14a; 13b, 14b; 15a, 16a; 15b, 16b), respectively, of said first and second compression members;

first and second means acting on said first and second connecting members, respectively, for exerting a compression force between said first and second compression members;

said first means acting at one end of said first connecting member to apply a force in a first preselected direction and acting on the one of said first ends of said compression members closest said one end of said first connecting member to apply a force in a direction opposite said first preselected direction, said first means comprising: a first housing (42); a first ram (43) translatably supported in said first housing; a first shaft (45) connected to said first ram and translatable therewith; a first coupling (46) for releasably connecting an end of said first shaft to said one end of said first connecting member; and said first housing being in force transmitting relationship to the one of said first ends of said compression members closest said one end of said first connecting member;

and said second means acting at one end of said second connecting member to apply a force in a second preselected direction and acting on the one of said second ends of said compression members closest said one end of said second connecting member to apply a force in a direction opposite said second preselected direction, said second means comprising: a second housing; a second ram translatably supported in said second housing; a second shaft connected to said second ram and translatable therewith; a second coupling for releasably connecting an end of said second shaft to said one end of said second connecting member; and said second housing being in force transmitting relationship to the one of said second ends of said compression members closest said one end of said second connecting member.

2. Apparatus in accordance with claim 1 wherein:

said first adjustable connecting member comprises:

a first threaded compression rod extending through said first ends of said compression members;

and first and second compression nuts (23) threaded onto opposite ends of said first threaded rod;

and said second adjustable connecting member comprises:

a second threaded compression rod extending through said second ends of said compression members;

and third and fourth compression nuts (23) threaded onto opposite ends of said second threaded rod.

3. Apparatus in accordance with claim 1 wherein:

said first and second preselected directions are the same.

4. Apparatus in accordance with claim 3 wherein:

said one end of said first connecting member and said one end of said second connecting member are above said first compression member.

5. Apparatus in accordance with claim 4 wherein:

said first means further comprises:

a first support assembly mounted on said one of said first ends and supporting said first housing;

and said second means further comprises:

a second support assembly mounted on said one of said second ends and supporting said second housing.

6. Apparatus in accordance with claim 5 further comprising:

a first spacer situated between said first support assembly and said one of said first ends;

and a second spacer situated between said second support assembly and said one of said second ends.

7. Apparatus in accordance with claim 6 wherein:

said first support assembly has an open interior and has an opening permitting access to said interior;

and said connected ends of said first shaft and said first connecting member and said first coupling are situated within said open interior of said first support assembly;

said second support assembly has an open interior and has an opening permitting access to said interior;

and said connected ends of said second shaft and second connecting member and said second coupling are situated within said interior of said second support assembly.

8. Apparatus in accordance with claim 1 or 5 further comprising:

a common source of pressure;

and means for connecting said first and second means to said common source of pressure.

9. Apparatus in accordance with claim 8 wherein:

said connecting means provides equal pressures to said first and second means.

10. Apparatus in accordance with claim 1 or 5 further comprising:

a number of first pads distributed on the surface of said first compression member facing said second compression member;

a number of second pads distributed on the surface of said second compression member facing said first compression member.

11. Apparatus in accordance with claim 10 further comprising:

first and second plates disposed between said first and second compression members, said first plate abutting said first pads of said first compression member and said second plate abutting said second pads of said second compression member.

12. Apparatus in accordance with claim 11 wherein:

said first pads and said second pads are distributed to provide a uniform compression force across said first and second plates.

13. Apparatus in accordance with claim 1 further comprising:

third and fourth compression members arranged in opposing spaced relationship, said third and fourth members being spaced from said first and second members;

third and fourth adjustable connecting members connecting opposing first and second ends, respectively, of said third and fourth compression members;

third and fourth means acting on said third and fourth connecting members, respectively, for exerting a compression force between said third and fourth compression members.

14. A method of compressing a fuel cell stack comprising:

arranging first and second compression members in opposing spaced relationship;

connecting opposing first ends and opposing second ends, respectively, of said first and second compression members;

and applying forces to said first and second connecting members for exerting a compression force between said first and second compression members; the application of force to said first connecting member being through a first ram assembly disconnectably attached to one end of said first connecting member, and the application of force to said second connecting member being through a second ram assembly disconnectably attached to one end of said second connecting member.

15. A method in accordance with claim 14 wherein:

a shaft of said first ram assembly connected to the ram of said first ram assembly is releasably connected to said one end of said first connecting member, the ram of said first ram assembly being translatably mounted to the housing of said first ram assembly which is in force transmitting relationship to the one of said first ends of said compression members which is closest said one end of said first connecting member;

and a shaft of said second ram assembly connected to the ram of said second ram assembly is releasably connected to said one end of said second connecting member, the ram of said second ram assembly being translatably mounted in the housing of said second ram assembly which is in force transmitting relationship to the one of said second ends of said compression members which is closest said one end of said second connecting member.

16. A method in accordance with claim 14 or 15 further comprising:

arranging first and second plates in spaced relationshihp with one another and in force transmitting relationship with said first and second compression members so that a uniform compression force is exerted across said first and second plates.

17. A method in accordance with claim 14 wherein:

the force applied to said first connecting member is substantiaally equal to the force applied to said second connecting member.

**Patentansprüche**

1. Vorrichtung zum Pressen einer Brennstoffzellenbatterie mit:

ersten und zweiten Druckelementen (13, 14; 15, 16), die einander gegenüberliegend und im Abstand angeordnet sind;

ersten und zweiten einstellbaren Verbindungselementen (18, 19, 21, 22; 23), die gegenüberliegende erste Enden bzw. gegenüberliegende zweite Enden (13a, 14a; 13b, 14b; 15a, 16a; 15b, 16b) der ersten und zweiten Druckelemente verbinden;

ersten und zweiten Einrichtungen, die auf die ersten bzw. zweiten Verbindungselemente wirken, um eine Druckkraft zwischen den ersten und zweiten Druckelementen auszuüben;

wobei die erste Einrichtung auf das eine Ende des ersten Verbindungselements wirkt, um eine Kraft in einer ersten vorgegebenen Richtung aufzubringen, und auf das eine der ersten Enden der Druckelemente wirkt, das dem einen Ende des ersten Verbindungselements am nächsten liegt, um eine Kraft in einer der ersten vorgegebenen Richtung entgegengesetzten Richtung auszuüben, und wobei die erste Einrichtung umfaßt: ein erstes Gehäuse (42); einen ersten Kolben (43), der verschiebbar in dem ersten Gehäuse gelagert ist; einen ersten Schaft (45), der mit dem ersten Kolben verbunden und mit diesem zusammen verschiebbar ist, und eine erste Kupplung (46) zum lösbaren Verbinden eines Endes des ersten Schaftes mit dem einen Ende des ersten Verbindungselementes, wobei sich das erste Gehäuse in Kraftübertragungsbeziehung mit dem einen der ersten Enden der Druckelemente befindet, das dem einen Ende des ersten Verbindungselements am nächsten liegt;

und die zweite Einrichtung auf das eine Ende des zweiten Verbindungselementes einwirkt, um eine Kraft in einer zweiten vorgegebenen Richtung auszuüben, und auf das eine der zweiten Enden der Druckelemente einwirkt, die dem einen Ende der zweiten Verbindungselemente am nächsten liegen, um eine Kraft in einer der zweiten vorgegebenen Richtung entgegengesetzten Richtung auszuüben, und wobei die zweite Einrichtung, umfaßt: ein zweites Gehäuse; einen zweiten Kolben, der verschiebbar in dem zweiten Gehäuse gelagert ist, einen zweiten Schaft, der mit dem zweiten Kolben verbunden und mit diesem zusammen verschiebbar ist, und eine zweite Kupplung zum lösbaren Verbinden eines Endes des zweiten Schaftes mit dem einen Ende des zweiten Verbindungselementes, wobei sich das zweite Gehäuse in Kraftübertragungsbeziehung mit dem einen der zweiten Enden der Druckelemente befindet, das dem einen Ende des zweiten Verbindungselements am nächsten liegt.

2. Vorrichtung nach Anspruch 1, wobei:

das erste einstellbare Verbindungselement umfaßt:

eine erste Druck-Gewindestange, die sich durch die ersten Enden der Druckelemente erstreckt;

und erste und zweite Druckmuttern (23), die auf entgegengesetzte Enden der ersten Gewindestange aufgeschraubt sind;

und das zweite einstellbare Druckelement umfaßt:

eine zweite Druck-Gewindestange, die sich durch die zweiten Enden der Druckelemente erstreckt;

und dritte und vierte Druckmuttern (23), die auf entgegengesetzte Enden der zweiten Gewindestange aufgeschraubt sind.

3. Vorrichtung nach Anspruch 1, wobei: die erste und die zweite vorgegebene Richtung die gleichen sind.

4. Vorrichtung nach Anspruch 3, wobei sich das eine Ende des ersten Verbindungselements und das eine Ende des zweiten Verbindungselements oberhalb des ersten Druckelements befinden.

5. Vorrichtung nach Anspruch 4, wobei die erste Einrichtung ferner umfaßt:

eine erste Halterungsanordnung, die an dem einen der ersten Enden montiert ist und das erste Gehäuse trägt;

und die zweite Einrichtung ferner umfaßt:

eine zweite Halterungsanordnung, die auf dem einen der zweiten Enden montiert ist und das zweite Gehäuse hält.

6. Vorrichtung nach Anspruch 5, mit:

einem ersten Abstandhalter, der zwischen der ersten Halterungsanordnung und dem einen der ersten Enden angeordnet ist,

und einem zweiten Abstandhalter, der zwischen der zweiten Halterungsanordnung und dem einen der zweiten Ende angeordnet ist.

7. Vorrichtung nach Anspruch 6, wobei:

die erste Halterungsanordnung einen offenen Innenraum und eine Öffnung aufweist, die den Innenraum zugänglich macht;

und die verbundenen Enden des ersten Schafts und des ersten Verbindungselementes und die erste Kupplung innerhalb des offenen Innenraumes der ersten Halterungsanordnung angeordnet sind;

die zweite Halterungsanordnung einen offenen Innenraum und eine Öffnung aufweist, die den Innenraum zugänglich macht;

und die verbundenen Enden des zweiten Schaftes und des zweiten Verbindungselements und die zweite Kupplung innerhalb des Innenraums der zweiten Halterungsanordnung angeordnet sind.

8. Vorrichtung nach Anspruch 1 oder 5, mit:

einer gemeinsamen Druckquelle;

und Einrichtungen zum Verbinden der ersten und zweiten Einrichtungen mit der gemeinsamen Druckquelle.

9. Vorrichtung nach Anspruch 8, wobei die Verbindungseinrichtung gleiche Druckwerte für die ersten und zweiten Einrichtungen schafft.

10. Vorrichtung nach Anspruch 1 oder 5, mit:

einer Anzahl erster Druckunterlagen, die auf der Oberfläche des ersten Druckelements, die dem zweiten Druckelement zugewandt ist, verteilt sind, und

einer Anzahl zweiter Druckunterlagen, die auf der Oberfläche des zweiten Druckelements, die dem ersten Druckelement zugewandt ist, verteilt sind.

11. Vorrichtung nach Anspruch 10, mit:

ersten und zweiten Platten, die zwischen den ersten und zweiten Druckelementen angeordnet sind, wobei die erste Platte bündig mit den ersten Druckunterlagen des ersten Druckelements und die zweite Platte bündig mit den zweiten Druckunterlagen des zweiten Druckelements angeordnet sind.

12. Vorrichtung nach Anspruch 11, wobei:

die ersten Druckunterlagen und die zweiten Druckunterlagen so verteilt sind, daß eine über die erste und zweite Platte gleichförmige Druckkraft erzeugt wird.

13. Vorrichtung nach Anspruch 1, mit:

dritten und vierten Druckelementen, die einander entgegengesetzt und im Abstand zueinander angeordnet sind, wobei die dritten und vierten Elemente von den ersten und zweiten Elementen Abstand aufweisen;

dritten und vierten einstellbaren Verbindungselementen, die gegenüberliegende erste bzw. zweiten Enden der dritten und vierten Druckelemente verbinden, und

dritte und vierte Einrichtungen, die auf das dritte bzw. vierte Druckelement einwirken, um eine Druckkraft zwischen dem dritten und vierten Druckelement auszuüben.

14. Verfahren zum Pressen einen Brennstoffzellenbatterie, wobei:

erste und zweite Druckelemente einander gegenüberliegend und im Abstand zueinander angeordnet werden;

gegenüberliegende erste Enden bzw. gegenüberliegende zweite Enden der ersten und zweiten Druckelemente verbunden werden;

und Kräfte an die ersten und zweiten Verbindungselemente angelegt werden, um eine Druckkraft zwischen dem ersten und zweiten Druckelement auszuüben, wobei das Anlegen der Kraft auf das erste Verbindungselement durch eine erste Kolbenanordnung erfolgt, die trennbar an dem einen Ende des ersten Verbindungselements angeordnet ist, und das Anlegen der Kraft an das zweite Verbindungselement durch eine zweite Kolbenanordnung erfolgt, die trennbar an dem einen Ende des zweiten Verbindungselements angeordnet ist.

15. Verfahren nach Anspruch 14, wobei:

ein Schaft der ersten Kolbenanordnung, der mit dem Kolben der ersten Kolbenanordnung verbunden ist, lösbar mit dem einen Ende des ersten Verbindungselements verbunden wird, wobei der Kolben der ersten Kolbenanordnung verschiebbar an dem Gehäuse der ersten Kolbenanordnung montiert ist, die sich in Kraftübertragungsbeziehung mit dem einen der ersten Enden der Druckelemente befindet, das dem einen Ende der ersten Verbindungselemente am nächsten liegt;

und ein Schaft der zweiten Kolbenanordnung, der mit dem Kolben der zweiten Kolbenordnung verbunden ist, lösbar mit dem einen Ende des zweiten Verbindungselementes verbunden wird, wobei der Kolben der zweiten Kolbenanordnung verschiebbar in dem Gehäuse der zweiten Kolbenanordnung montiert ist, die sich in Kraftübertragungsbeziehung mit dem einen der zweiten Enden des Druckelements befindet, das dem einen Ende des zweiten Verbindungselements am nächsten liegt.

16. Verfahren nach Anspruch 14 oder 15, wobei ferner:

erste und zweite Platten im Abstand zueinander und zur Kraftübertragung auf die ersten und zweiten Druckelemente angeordnet werden, so daß eine über die ersten und zweiten Platten gleichförmige Druckkraft ausgeübt wird.

17. Verfahren nach Anspruch 14, wobei:

die an das erste Verbindungselement angelegte Kraft im wesentlichen gleich der an das zweite Verbindungselement angelegten Kraft ist.

**Revendications**

1. Dispositif pour comprimer un empilement de piles à combustible comprenant:

des premiers et deuxièmes éléments de compression (13, 14; 15, 16) disposés dans des positions espacées et opposées;

des premiers et deuxièmes moyens de liaison réglables (18, 19, 21, 22; 23) qui relient respectivement des premières extrémités opposées et des deuxièmes extrémités opposées (13a, 14a; 13b, 14b; 15a, 16a; 15b, 16b) desdits premiers et deuxièmes éléments de compression;

des premiers et deuxièmes moyens qui agissent respectivement sur les premiers et deuxièmes éléments de liaison, pour exercer une force de compression entre lesdits premiers et deuxièmes éléments de compression;

lesdits premiers moyen agissant sur une extrémité dudit premier élément de liaison pour appliquer une force dans un premier sens prédéterminé et agissant sur celle desdites premières extrémités desdits éléments de compression qui est la plus rapprochée de ladite extrémité dudit premier élément de liaison, pour appliquer une force dans la direction opposée audit premier sens prédéterminé, lesdits premiers moyens comprenant : un premier carter (42), un premier vérin (43) monté avec possibilité de translation dans ledit premier carter; une première tige (45) reliée audit premier vérin et capable de se déplacer en translation avec celui-ci; un premier accouplement (46) servant à relier une extrémité de ladite première tige par une liaison démontable à ladite extrémité dudit premier élément de liaison; et ledit premier carter étant en relation de transmission de la force avec celle desdites premières extrémités desdits éléments de compression qui est la plus rapprochée de ladite extrémité dudit premier élément de liaison;

et lesdits deuxièmes moyens agissant à une extrémité dudit deuxième élément de liaison pour appliquer une force dans un deuxième sens prédéterminé et agissant sur celle desdites deuxièmes extrémités desdits éléments de compression qui est la plus proche de ladite extrémité dudit deuxième élément de liaison pour appliquer une force dans un sens opposé audit deuxième sens prédéterminé, lesdits deuxièmes moyens comprenant : un deuxième carter; un deuxième vérin supporté avec possibilité de translation dans le deuxième carter; une deuxième tige reliée audit deuxième carter et capable de se déplacer en translation avec lui; un deuxième accouplement destiné à relier une extrémité de ladite première tige par une liaison démontable à ladite extrémité dudit deuxième élément de liaison; et ledit deuxième carter étant en relation de transmission de la force avec celle desdites deuxièmes extrémités desdits éléments de compression qui est la plus proche de ladite extrémité dudit deuxième élément de liaison.

2. Dispositif selon la revendication 1, dans lequel:

ledit premier élément de liaison réglable comprend une première tige de compression filetée qui traverse lesdites premières extrémités desdits éléments de compression;

et des premiers et deuxièmes écrous de compression (23) vissés sur les extrémités opposées de ladite première tige filetée;

et ledit deuxième élément de liaison réglable comprend:

une deuxième tige de compression filetée qui traverse lesdites deuxièmes extrémités desdits éléments de compression;

et des troisième et quatrième écrous de compression (23) vissés sur les extrémités opposées de ladite deuxième tige filetée.

3. Dispositif selon la revendication 1, dans lequel le premier et le deuxième sens prédéterminés sont identiques.

4. Dispositif selon la revendication 3, dans lequel ladite extrémité dudit premier élément de liaison et ladite extrémité dudit deuxième élément de liaison sont situées au-dessus dudit premier élément de compression.

5. Dispositif selon la revendication 4, dans lequel:

lesdits premiers moyens comprennent en outre:

un premier ensemble support monté sur ladite première citée desdites premières extrémités et supportant ledit premier carter;

et lesdits deuxièmes moyens comprennent en outre:

un deuxième ensemble support monté sur ladite première citée desdites deuxièmes extrémités et supportant ledit deuxième carter.

6. Dispositif selon la revendication 5, comprenant en outre:

une première cale située entre ledit premier ensemble support et ladite première citée desdites premières extrémités;

une deuxième cale située entre ledit deuxième ensemble support et ladite première citée desdites deuxièmes extrémités.

7. Dispositif selon la revendication 6, dans lequel:

ledit premier ensemble support présente un volume intérieur ouvert et présente une ouverture qui donne accès audit volume intérieur

et lesdites extrémités reliées de ladite première tige et dudit premier élément de liaison, et ledit premier accouplement sont situés à l'intérieur dudit volume intérieur ouvert dudit premier ensemble support;

ledit deuxième ensemble support présente un volume intérieur ouvert et présente une ouverture permettant d'accéder audit volume intérieur;

et lesdites extrémités reliées de ladite deuxième tige et du deuxième élément de liaison et ledit deuxième accouplement sont situés dans ledit volume intérieur dudit deuxième ensemble support.

8. Dispositif selon la revendication 1 ou la revendication 5, comprenant en outre:

une source de pression commune;

et des moyens servant à relier lesdits premiers et deuxièmes moyens à ladite source de pression commune.

9. Dispositif selon la revendication 8, dans lequel lesdits moyens de liaison transmettent des pressions égales auxdits premiers et deuxièmes moyens.

10. Dispositif selon la revendication 1 ou la revendication 5, comprenant en outre:

un certain nombre de premières semelles réparties sur la surface dudit premier élément de compression qui fait face audit deuxième élément de compression;

un certain nombre de deuxièmes semelles réparties sur la surface dudit deuxième élément de compression qui fait face audit premier élément de compression.

11. Dispositif selon la revendication 10, comprenant en outre un premier et un deuxième plateaux disposés entre lesdits premiers et deuxièmes éléments de compression, ledit premier plateau butant contre lesdites premières semelles dudit premier élément de compression et ledit deuxième plateau butant contre lesdites deuxièmes semelles dudit deuxième élément de compression.

12. Dispositif selon la revendication 11, dans lequel:

lesdites premières semelles et lesdites deuxièmes semelles sont réparties pour exercer une force de compression uniforme sur lesdits premier et deuxième plateaux.

13. Dispositif selon la revendication 1, comprenant en outre des troisième et quatrième éléments de compression disposés dans des positions relatives opposées et espacées, lesdits troisième et quatrième éléments étant espacés dudit premier et dudit deuxième élément;

des troisième et quatrième éléments de liaison réglables qui relient respectivement les premières et deuxièmes extrémités opposées desdits troisième et quatrième éléments de compression;

des troisième et quatrième moyens qui agissent respectivement sur lesdits troisième et quatrième éléments de liaison pour exercer une force de compression entre lesdits troisième et quatrième éléments de compression. .

14. Procédé pour comprimer un empilement de piles à combustible consistant:

disposer un premier et un deuxième éléments de compression dans des positions relatives opposées et espacées;

relier respectivement les premières extrémités opposées et les deuxièmes extrémités opposées desdits premier et deuxième éléments de compression;

et appliquer des forces auxdits premier et deuxième éléments de liaison pour exercer une force de compression entre lesdits premier et deuxième éléments de compression, l'application de la force auxdits premiers éléments de liaison s'effectuant par l'intermédiaire d'un premier ensemble vérin qui est fixé par une liaison démontable à une extrémité dudit premier élément de liaison et l'application de la force audit deuxième élément de liaison s'effectuant par l'intermédiaire d'un deuxième ensemble vérin qui est relié par une liaison démontable à une extrémité dudit deuxième élément de liaison.

15. Procédé selon la revendication 14, dans lequel:

une tige dudit premier ensemble vérin qui est reliée au vérin dudit premier ensemble vérin est reliée par une liaison démontable à ladite extrémité dudit premier élément de liaison, le vérin dudit premier ensemble vérin étant monté avec possibilité de translation sur le carter dudit premier ensemble vérin qui est dans une position relative de transmission de la force avec celle desdites premières extrémités desdits premiers éléments de compression qui est la plus rapprochée de ladite extrémité dudit premier élément de liaison;

et une tige dudit deuxième ensemble vérin, qui est reliée au vérin dudit deuxième ensemble vérin, est reliée par une liaison démontable à ladite extrémité dudit deuxième élément de liaison, le vérin dudit deuxième ensemble vérin étant monté avec possibilité de translation dans le carter dudit deuxième ensemble vérin qui est dans une position relative de transmission de la force avec celle desdites deuxièmes extrémités desdits éléments de compression qui est la plus proche de ladite extrémité dudit deuxième élément de liaison.

16. Procédé selon la revendication 14 ou la revendication 15, consistant en outre à:

agencer le premier et le deuxième plateaux dans des positions espacées l'une de l'autre et dans des positions relatives de transmission de la force par rapport auxdits premier et deuxième éléments de compression de telle manière qu'une force de compression uniforme s'exerce en travers desdits premier et deuxième plateaux.

17. Procédé selon la revendication 14, dans lequel:

la force appliquée audit premier élément de liaison est au moins approximativement égale à la force appliquée audit deuxième élément de liaison.

FIG. 1

0 082 516

FIG. 2